# EUROPEAN PATENT APPLICATION

(11) **EP 0 939 306 A1**
(43) Date of publication of application: **01.09.1999**
(21) Application number: 99102447.2
(22) Date of filing: 09.02.1999
(51) Int. Cl.: G01F 9/02

(54) **Device and relative method for monitoring fuel consumption in a vehicle**

(30) Priority: 26.02.1998 IT MI980379
(71) Applicant: Tecnoblock S.r.l., 29100 Piacenza (IT)
(72) Inventor: Mazzei, Giampaolo, 29100 Piacenza (IT)
(74) Representative: Kratter, Carlo, Dr. Ing.

(57) **Abstract**

A device for monitoring fuel consumption in a vehicle, of the type comprising first means (1) arranged to measure the state of motion of the vehicle and to generate a corresponding first signal, and second means (2) arranged to measure the fuel quantity in a vehicle tank (3) and to generate a corresponding second signal; said first and second means (1, 2) measure said state of motion and said fuel quantity in a manner substantially continuous with time, means (9, 7) being provided to associate with said first and second signal a chronological reference, ie a reference relative to that moment in time in which said signals were generated, means (10; 13A) being provided to enable the acquired signals to be compared chronologically.

## Description

This invention relates to a device for monitoring fuel consumption in a vehicle and a relative monitoring method in accordance with the pre-characterising part of the respective independent claims.

In vehicles, and in particular in trucks, it can happen that fuel is fraudulently withdrawn from the tank or that a fuel quantity less than that purchased is fed in on refilling.

Fuel losses and/or irregular fuel consumption can also occur in vehicles because of a fault.

Known monitoring devices are not able to provide signals able to indicate the aforesaid irregularities, in which respect usual fuel level, vehicle speed or engine r.p.m. indicators do not memorize or display the relative data against time and generally do not provide any signal when the vehicle is switched off or at rest.

An object of this invention is to provide a device for monitoring the fuel consumption of a vehicle and a relative monitoring method, by which any fuel thefts and/or fuel leakages and/or vehicle malfunction can be determined.

A further object is to provide a device of easy production, reliable operation and low cost.

These and further objects which will be apparent to an expert of the art are attained by a device and method in accordance with the characterising part of the relative independent claims.

The invention will be more apparent from the accompanying drawings, which are provided by way of non-limiting example and on which:

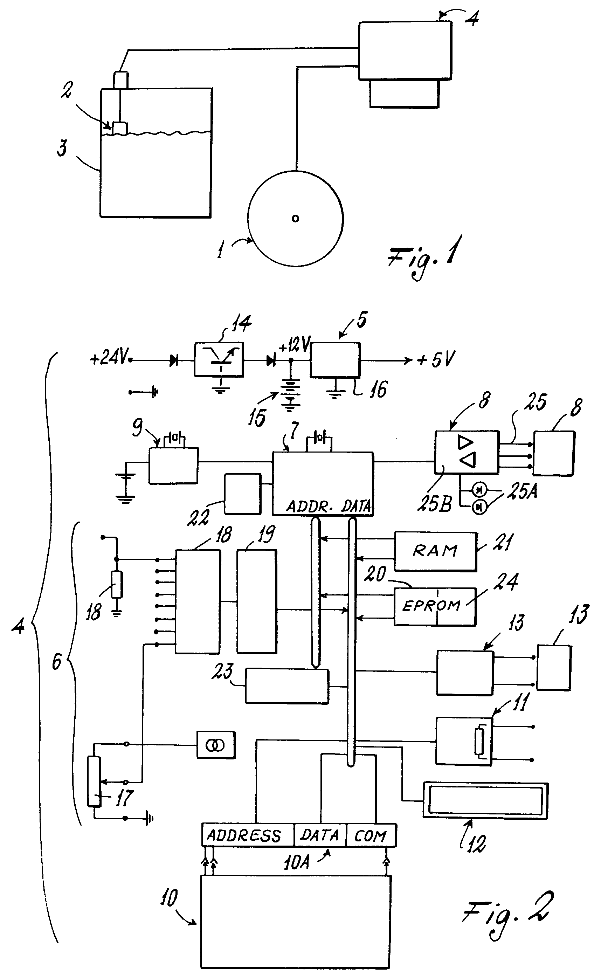

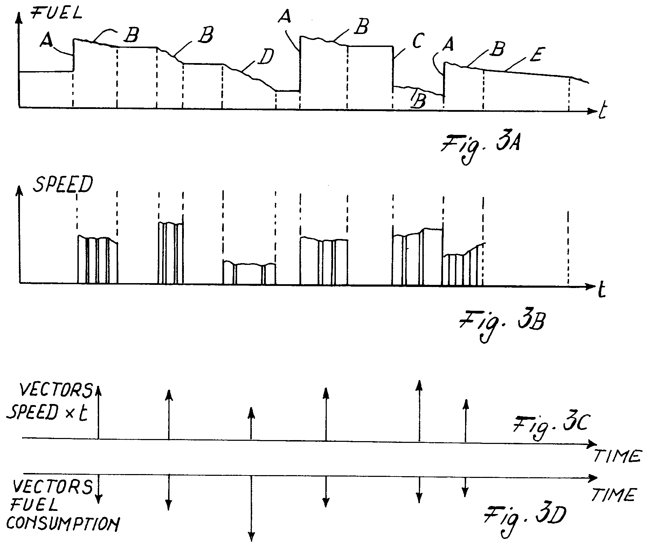

Figure 1 is a block diagram of a device according to the invention;
Figure 2 is a block diagram of its control circuit;
Figures 3A, B, C, D show three possible displays for the signals sensed by the device.

With reference to said figures, a device according to the invention comprises first means 1 arranged to measure the state of motion of the vehicle and to generate a corresponding first signal, second means 2 arranged to measure the fuel quantity in the tank 3 and to generate a corresponding second signal, and means 4 for processing and memorizing the signals received in chronological sequence.

The first means 1 for measuring the state of motion of the vehicle can be implemented using the usual tachograph normally installed on vehicles. Specifically, the usual tachograph analog output can be used, this providing a current signal of intensity varying from 4 to 20 mA depending on the vehicle speed.

The second means 2 for measuring the fuel quantity in the tank can be implemented using the output of the usual indicator mounted on the vehicle. In this case the system resolution will be low, for example 1/60 of the tank capacity. To improve the system resolution, conventional potentiometer transducers can be used. In all cases, the indicator generates an analog signal, for example a voltage signal, the value of which varies on the basis of the fuel quantity in the tank.

The means 4 for recording the signals from the measurement means 1 and 2 with chronological indication comprise a power unit 5, an interface 6 for the analog input signals, a microprocessor 7, a serial output line 8, a clock 9, a bulk memory 10, an element 11 allowing "transparent" insertion of the device, and means 12, 13 for displaying the acquired signals and/or other data or messages by the device.

The power unit 5 comprises a first usual component 14 for reducing the vehicle voltage generally from 24 V d.c to 12 V d.c. and providing initial filtering, a rechargeable buffer battery 15 able to maintain an independent power feed for a predetermined time period, for example 72 hours, even with the vehicle at rest or unused, and a further filter and stabilizer 16, for example of Motorola 7805 type, to stabilize the feed voltage at +5 V d.c.

The interface 6 for the input analog signals comprises for the level signal and speed signal a usual component 17, 18 able to amplify and filter the signal (for this purpose a low-pass active filter can for example be used, with a cut-off frequency of about 100 Hz) before feeding it to a multiplexer 18. This latter is for example of 8-input programmable analog type, for example of Borr-Brown MPC508A type. The multiplexer 18 is connected to a usual analog-digital converter 19, for example of 12 bit type with a conversion time of 40 µsec (for example of Borr-Brown ADS574 type).

The microprocessor 7 is for example an 8-bit Zilog Z80180 or Hitachi 7180X with a 12,288 MHz base oscillator. This microprocessor comprises a UART serial line, two programmable timers, three interrupt lines and other usual devices not used in the present application. The microprocessor 7 is connected to a program EPROM (for example type 27512), an SRAM 21 (for example 32 Kbytes, type 42256), a watch-dog circuit 22 (for example Maxim 960 type), a serial EEPROM 24 to memorize the specific setting values (for example of 2 Kbytes), two PLAs 23 for handling the memories (for example of PLD C 20 G 10 type).

The microprocessor 7 is also connected to a serial line (for example type RS232) with a driver 25B and two LEDs 25A for indicating the active line and the direction of data transfer. This line is connected to a conventional device control keyboard 8A.

The microprocessor 7 is also connected to the clock 9, for example of MK41T56 type, with a battery for powering the oscillator even if the primary circuit power is absent. This clock provides the microprocessor with "real time", ie a time reference, to be associated with each signal acquired, this being necessary for comparing the measured data. This signal also enables anything affecting the vehicle electrical power feed to be noted, such as the time at which the primary voltage fails, the time at which the buffer battery becomes exhausted, and the real time at which the primary voltage is restored. The clock 9 preferably uses time scanning coinciding with real time, this meaning that the clock provides a time and date coinciding with real time, ie that in which the vehicle is effectively utilized.

The microprocessor 7 is also connected to the bulk memory 10, this advantageously being a non-volatile memory of flash-memory type, inserted in a support removable from the circuit, for example a 1 Mbyte PCMCIA Atmed AT5FC004 memory card. This memory is used for saving the fuel level and speed data and the relative moments of their measurement, and being removable enables the recorded data to be transported and read in a device different from that in which they have been recorded. The data are inserted into the memory 10 by activating appropriate programmable gates in conventional manner. As the direct memory address field of the 8 bit processor 7 is less than the virtual memory address of the memory card, usual buffer latch circuits 10A are provided to temporarily fix both the address data and the actual data. Up to 32 Mbytes of memory can be addressed using only input-output commands for the microprocessor 7.

The element 11 enables the circuit 4 to be connected into the existing vehicle electrical system "transparently", ie such that the existing circuits are not influenced by the circuit of the invention. For this reason the value provided by the actual potentiometer which measures the fuel level in the tank must be reconstructed by a virtual potentiometer. For this purpose a component is used which enables the resistance between two points to be varied by conventionally feeding to the component a suitable string of data generated by the program of the microprocessor 7, on the basis of the measured fuel level. The element 11 can for example be of XICOR X9221 type (E POT non-volatile digital potentiometer).

The microprocessor 7 can also be connected to a display 12 which can for example be of Toshiba G6J type with 32 alphanumeric characters on two lines of 16 characters with back illumination, and can for example display current date and time, tank fuel level, average fuel consumption over the last 100 km, fuel slow leakage alarm, vehicle power interrupt alarm and other possible alarms. The individual messages can be presented automatically one after another every 20 seconds.

The microprocessor 7 can also be connected via a digital-analog converter 13 to as conventional continuous two-trace recorder on paper 13A, arranged to trace a graph showing the variation with time of the signals relative to the tank fuel quantity and vehicle speed. The converter 13, of conventional type, provides two standard 4-20 mA outputs for the two signals, and a logic output in open collector providing a 4 microsecond positive pulse with 1 second repetition.

By means of the microprocessor program (which will not be described in detail as it is of conventional type to an expert of the art), the aforedescribed device performs the following operations:
- on switching the device on, it initializes those components which require initialization (for example serial ports, timer selection memories etc.);
- it interprets the messages received along the serial line, if necessary responding to the request. The messages can for example be of the type "provide the data of each speed and any alarm signals for day 7 of the current month", or "provide the total fuel consumed, or the total fuel fed into the tank" and other similar messages;
- it acquires the input analog data, or the signal relative to the fuel level and speed;
- it processes the data to be fed into the bulk memory 10 as a single recorded unit and associates with each recorded unit the moment in time in which the signal was acquired;
- it inserts a recorded unit into the bulk memory 10;
- it feeds the data to the display;
- it feeds the data to the paper recorder (13, 13A);
- it updates the component 11 on the basis of the level signal acquired.

The recorded units for the acquired signals advantageously have a frequency of one minute. Every minute, the program calculates the average value of the input signal, it compares it with the value obtained for the previous minute and if there have been any significant changes it memorizes them in the memory 10.

Each memorization comprises an indication of the minute of the current month, the relative value of the tank fuel quantity measurement in floating point, and the vehicle speed.

Advantageously, using the data in the memory 10, the microprocessor 7 also calculates the values to feed to the display 12 (for example current speed and tank level, fuel consumption per 100 km, average speed during the last 10 minutes, etc.) and processes these data to feed an alarm signal (for example slow fuel leakage alarm, or vehicle power interruption alarm).

The programs for implementing said operations are not described in detail hereinafter as they are totally conventional for an expert of the art.

It should be noted that with the device as described up to this point, the fuel level and vehicle speed signals are acquired and memorized or recorded in a substantially continuous manner. In the present context the expression "substantially continuous" means that the signals are acquired, without substantial interruption, for the entire time period during which these signals are to be acquired. In this manner, by means of the fuel level and vehicle speed signals and the signal indicating the moment of obtaining the level and speed signals, sufficient information is available to reconstruct the "history" of the variation in the tank fuel level with time, in correlation with the simultaneous variation in the vehicle speed, ie information making it possible to determine by comparison whether a correct speed variation corresponds or otherwise to a certain fuel level variation, and hence whether the fuel consumption is irregular.

When the speed and fuel level readings and the relative moments in time have been memorized, the memory card 10 can be read by conventional devices which are advantageously also able to process its content. For this purpose for example a personal computer can be used, connected to a usual memory card reader and provided with a data processing and interpretation program. The program (which will not be described in detail as it is of conventional type for an expert of the art) can, for example, provide the facility for choosing one of the following data reading strategies:
- read all the memorized data;
- read all data starting from the last reading;
- read all data between two time references. The processing executed by the program on the series of data can be to:
- calculate the total fuel fed into the tank;
- calculate the total fuel consumed;
- calculate the total kilometres travel led (in this case it is sufficient to add together the individual average speeds multiplied by the running time);
- automatically seek those moments in time at which fuel was loaded into the tank and calculate the fuel loaded;
- automatically seek those moments in time in which a considerable decrease in fuel level is noted with the vehicle at rest, corresponding to a theft of fuel, and calculate the fuel stolen. It should be noted that to effect this calculation the fuel level variation within a predetermined time interval is compared with a value corresponding to the maximum possible fuel consumption for that time interval;
- automatically seek those moments in time in which a small decrease in fuel level is noted with the vehicle at rest, corresponding to a slow fuel leakage;
- automatically seek those moments in time in which an irregular fuel consumption is noted with the vehicle moving, corresponding to an engine malfunction. Again in this case a comparison is made with a standard optimum value for the average speed measured during the time interval.

The program is able to display the following graphs on the screen or on paper:
- representation of the tank fuel level as a time-litres diagram (Figure 3A);
- representation of the vehicle speed as a time-speed diagram (Figure 3B);
- representation of the fuel consumed as a time-litres diagram;
- representation of the distance covered as a time-kilometres diagram;
- representation of the efficiency in terms of fuel consumption per kilometre as a litres-kilometres diagram.

The program is also preferably able to automatically indicate:
- those moments in time in which fuel has been fed into the tank and the amount of this feed;
- those moments in time in which fuel has been fraudulently withdrawn and the amount of this withdrawal;
- those moments in time in which small fuel leakages have occurred and the amount of these leakages at said moments;
- those moments in time in which irregular variations in fuel consumption have occurred, the value of these variations and the vehicle speed at those moments.

The aforesaid information and the graphs can be displayed on the computer monitor and/or displayed or memorized in other known ways.

Advantageously the program also provides a zoom function for the time scale, to enable detailed analysis of the time base. With reference to Figures 3A, 3B, 3C, 3D which, by way of example, show the time graphs of speed, fuel consumption, and average speed and and fuel consumption over a period of one week, the following can be seen:
- date and time of fuel feed into the tank and the fuel quantity fed (lines indicated by A in the graph of Figure 3A);
- fuel consumption with vehicle moving (lines B). The fuel consumption is calculated as the integral of the fuel value and is always of negative sign; the average value is shown in Figure 3D, whereas Figure 3C shows the respective average speed;
- fraudulent fuel withdrawal (line C), corresponding to a large fuel variation with the vehicle at rest;
- first warning situation (line D), corresponding to a large fuel variation at low running speed. If this situation is not justified by difficult running conditions (for example up-hill under full load), the situation denotes a vehicle malfunction;
- second warning situation (line E), corresponding to a small fuel variation with the vehicle at rest, identifying a slow leakage or a slow fraudulent fuel withdrawal.

Finally, it should be noted that the aforedescribed embodiment is provided by way of example and that numerous variants are possible all falling within the same inventive concept. In an extremely simplified embodiment the device of the invention could dispense with the electronic circuit of Figure 4 and simply comprise means for measuring the state of motion of the vehicle (for example a tachograph), means for measuring the fuel quantity in the tank (for example a potentiometer level indicator), and a chronological recorder arranged to continuously trace on paper the values measured by said measurement means with time. In that case graphs simply of the type shown in Figures 3A, B would be available, from which in any case it would always be possible to effect a comparison of the signals acquired, to establish whether the fuel consumption has been "regular" or whether there have been fraudulent fuel withdrawals, all the further aforelisted evaluations also being available.

Alternatively, the device of the invention could be further improved by connecting the multiplexer 19 to further measurement means, with suitable modification to the input signal handling and processing programs. In particular, it could be useful to provide means for sensing whether the vehicle engine is switched on or off, and/or the engine r.p.m., to enable the fuel consumption with the vehicle at rest to be evaluated with greater accuracy.

For this purpose the conventional signals originating from the vehicle r.p.m. counter could be used. In addition, conventional means for measuring the vehicle inclination and weight could be provided, to enable the vehicle fuel consumption to be evaluated with greater accuracy in relation to the vehicle utilization conditions. If the aforesaid measurement means are added to the control device, the described data processing and handling programs must be modified in a manner totally conventional for an expert of the art in relation to the aforegoing description. The signals acquired could also be processed directly by the microprocessor unit 7, in which case the device could be directly provided, for example in tabular form, with all the data required for monitoring the fuel consumption.

## Claims

1. A device for monitoring fuel consumption in a vehicle, of the type comprising first means (1) arranged to measure the state of motion of the vehicle and to generate a corresponding first signal, and second means (2) arranged to measure the fuel quantity in a vehicle tank (3) and to generate a corresponding second signal, characterised in that said first and second means (1, 2) measure said state of motion and said fuel quantity in a manner substantially continuous with time, means (9, 7) being provided to associate with said first and second signal a chronological reference, ie a reference relative to that moment in time in which said signals were generated, means (10; 13A) being provided to enable the acquired signals to be examined chronologically.

2. A device as claimed in claim 1, characterised in that the means which enable the acquired signals to be examined comprise a first processing unit (7) for said signals and a memorizing unit for said signals, the means for associating a chronological reference with the acquired signals comprising a clock (9) connected to said processing unit (7).

3. A device as claimed in claim 2, characterised in that the memory unit (10) is removable, so that the acquired signals and the relative chronological references can be read and processed by a second processing unit separate from the first.

4. A device as claimed in claim 3, characterised in that the memory unit (10) is a memory card.

5. A device as claimed in claim 1, characterised in that the means for measuring the vehicle state of motion comprise a conventional tachograph (1).

6. A device as claimed in claim 1, characterised in that the means for measuring the vehicle state of motion comprise a conventional member for measuring the engine r.p.m.

7. A device as claimed in claim 1, characterised in that the means for measuring the fuel quantity in the tank comprise a conventional tank fuel level indicator (2) of potentiometer type.

8. A device as claimed in claim 1, characterised in that the signal acquisition means comprise a multiplexer (18) and an analog-digital converter (19).

9. A device as claimed in claim 1, characterised by comprising an electrical power unit (5) connected to the conventional vehicle power supply members and incorporating a rechargeable battery (15) able to provide electrical power to the device when the vehicle power supply is interrupted.

10. A device as claimed in claim 2, characterised by comprising an interface (8A; 12) connected to the first processing unit (7) and comprising a display (8A) and a keyboard (12) for controlling the device.

11. A device as claimed in claim 1, characterised in that the means for comparing the received signals comprise a conventional member (13A) for chronologically recording or memorizing the acquired signals.

12. A device as claimed in claim 11, characterised in that the recording member is a conventional chronological recorder (13A) for recording on paper the two signals relative to the vehicle state of motion and the fuel quantity.

13. A device as claimed in claim 12, characterised by comprising means for graphically representing the variation in the fuel quantity in the vehicle tank with time as a fuel quantity-time diagram.

14. A device as claimed in claim 1, characterised by comprising means for graphically representing the variation in vehicle speed with time as a speed-time diagram.

15. A device as claimed in claim 1, characterised by comprising means for representing the variation in consumed fuel quantity with time as a time-consumed fuel quantity diagram.

16. A device as claimed in claim 1, characterised by comprising means for representing the variation in vehicle travel with time as a time-kilometres travelled diagram.

17. A device as claimed in claim 1, characterised by comprising means for representing the vehicle efficiency or the fuel combustion for the distance travel led as a fuel quantity-distance travelled diagram.

18. A device as claimed in claim 1, characterised by comprising means for calculating and automatically indicating those moments in time in which fuel has been fed into the tank, and the total of these feeds.

19. A device as claimed in claim 1, characterised by comprising means for calculating and automatically indicating those moments in time in which fuel has been fraudulently withdrawn, and the total of these withdrawals.

20. A device as claimed in claim 1, characterised by comprising means for calculating and automatically indicating those moments in time in which small fuel leakages have occurred, and the total of these leakages.

21. A device as claimed in claim 1, characterised by comprising means for calculating and automatically indicating those moments in time in which irregular variations in fuel consumption have occurred, the value of these variations, and the vehicle speed at those moments.

22. A device as claimed in claim 1, characterised by comprising means for calculating and automatically indicating the fuel consumption with the vehicle moving.

23. A method for fuel monitoring in a vehicle, of the type comprising a first measurement by which the vehicle state of motion is measured and a respective first signal is generated, and a second measurement by which the fuel quantity in the vehicle tank is measured and a respective second signal is generated, characterised in that said measurements are made continuously with time, with the signals there being associated a chronological reference, ie a reference relative to the moment in time in which said signals were generated.

24. A method as claimed in claim 23, characterised by comprising a stage in which the acquired signals and the moments in which said signals were acquired are recorded or memorized.

25. A method as claimed in claim 23, characterised in that time scanning coinciding with current time scanning is used for the chronological reference.

26. A method as claimed in claim 23, characterised by comprising a first stage in which the acquired signals and the relative moments of their acquisition are memorized, and a second stage, separated in time from the first, in which these signals are processed and compared.

27. A method as claimed in claim 23, characterised by comprising a stage in which the variation in the fuel quantity in the vehicle tank with time is represented graphically as a fuel quantity-time diagram.

28. A method as claimed in claim 23, characterised by comprising a stage in which the variation in the vehicle speed with time is represented graphically as a speed-time diagram.

29. A method as claimed in claim 23, characterised by comprising a stage in which the variation in the consumed fuel quantity with time is represented as a time-consumed fuel quantity diagram.

30. A method as claimed in claim 23, characterised by comprising a stage in which the variation in the distance travel led by the vehicle with time is represented as a time-kilometres travel led diagram.

31. A method as claimed in claim 23, characterised by comprising a stage in which the vehicle efficiency or the fuel consumption per kilometre is represented as a fuel quantity-kilometres diagram.

32. A method as claimed in claim 23, characterised by comprising a stage in which those moments in time in which fuel has been fed into the tank, and the total of these feeds, are calculated and automatically indicated.

33. A method as claimed in claim 23, characterised by comprising a stage in which those moments in time in which fuel has been fraudulently withdrawn, and the total of these withdrawals, are calculated and automatically indicated.

34. A method as claimed in claim 23, characterised by comprising a stage in which those moments in time in which small fuel leakages have occurred, and the total of these leakages at said moments, are calculated and automatically indicated.

35. A method as claimed in claim 23, characterised by comprising a stage in which are calculated and automatically indicated: irregular variations in the fuel consumption, the value of these variations, and the vehicle speed at those moments in time in which these variations have occurred.

36. A method as claimed in claim 23, characterised by comprising a stage in which the fuel consumption with the vehicle moving is calculated and automatically indicated.
